# EUROPEAN PATENT SPECIFICATION

(11) **EP 1 696 296 B1**
(45) Date of publication and mention of the grant of the patent: **08.06.2011**
(21) Application number: 05292711.8
(22) Date of filing: 15.12.2005
(51) Int. Cl.: G05D 1/02

(54) **Robot cleaner and method of control thereof**
Reinigungsroboter und Verfahren zu dessen Steuerung
Robot de nettoyage et méthode de commande de ce robot

(30) Priority: 24.02.2005 KR 2005015468
(43) Date of publication of application: 30.08.2006
(73) Proprietor: Samsung Gwangju Electronics Co., Ltd., Gwangju-city (KR)
(72) Inventor: Lee, Ju-sang, Gwangsan-gu Gwangju-city (KR); Jeung, Sam-jong, Gwangsan-gu Gwangju-city (KR); Song, Jeong-gon, Gwangsan-gu Gwangju-city (KR); Ko, Jang-youn, Gwangsan-gu Gwangju-city (KR); Lim, Kwang-soo, Geumcheon-gu Seoul (KR); Kim, Ki-man, Gwangsan-gu Gwangju-city (KR)
(74) Representative: Blot, Philippe Robert Emile

(56) References cited:
- EP-A- 1 672 455
- US-A- 6 076 025
- US-A1- 2003 025 472

## Description

### FIELD OF THE INVENTION

The present invention relates to a robot cleaner and controlling method thereof. More particularly, the present invention relates to a robot cleaner and controlling method thereof for improving coverage of the robot cleaner on a cleaning area.

### BACKGROUND OF THE INVENTION

Recently, a market for robots for home use has developed and is growing. Various types of robot cleaners have been introduced and compete in the market. It is important for a robot cleaner to clean an entire area without leaving any area uncleaned. To this end, a robot cleaner must distinguish uncleaned areas from cleaned areas in order to clean the entire area. Typical cleaning methods of conventional robot cleaner include a random sweeping method and a pattern sweeping method.

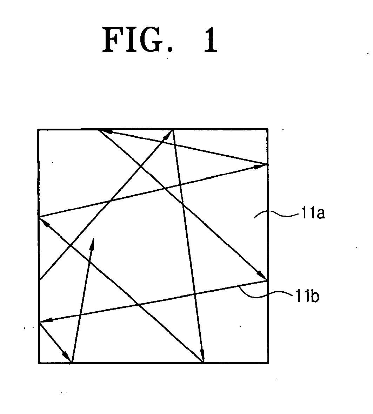

FIG. 1 shows an example of a conventional random cleaning method. Referring to FIG. 1, reference numeral 11a indicates a cleaning area, and reference numeral 11b indicates a random cleaning trajectory. The random cleaning method means that a cleaner maneuvers a cleaning area without any rule to perform cleaning. In other words, it moves in a manner similar to a rotating ball that springs out after colliding with a wall in a V-shape. The random cleaning method often fails to clean the entire area.

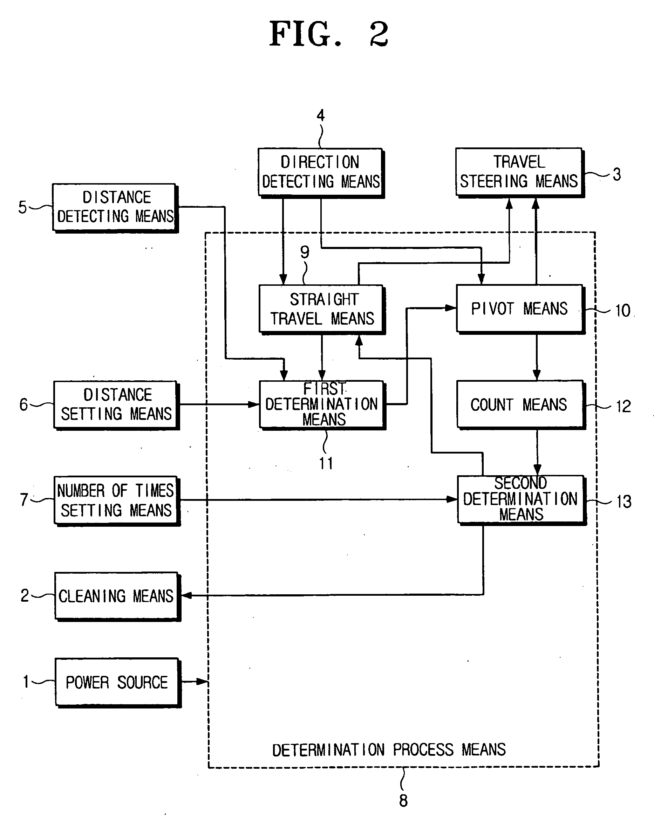

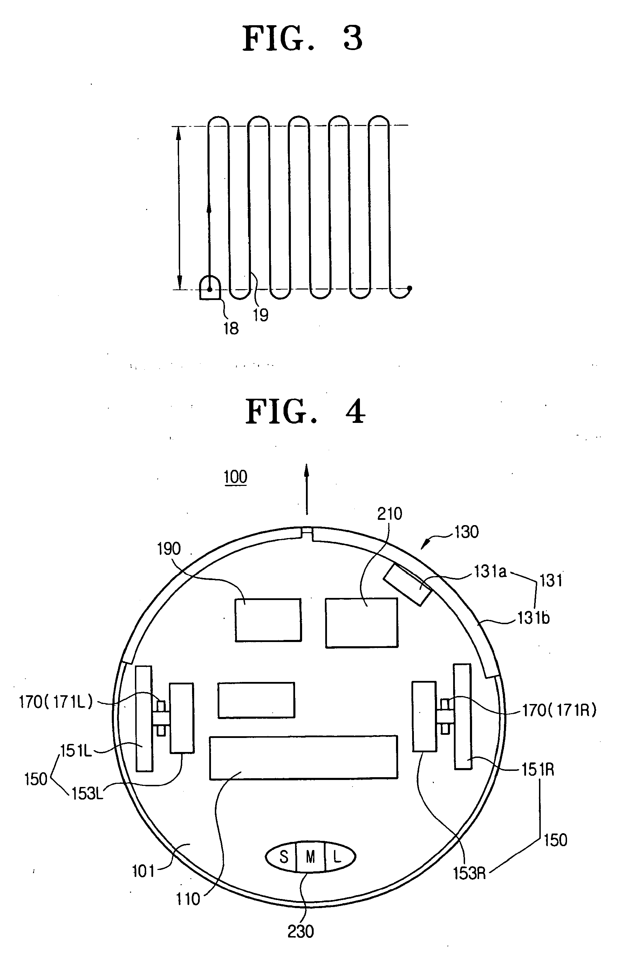

FIG. 2 is a view of an example of a conventional pattern cleaning method, disclosed in Japanese Patent Publication No. 5161577, published on June 29, 1993. FIG. 3 is a view of a cleaning travel pattern performed by the construction of FIG. 2.

Referring to FIGS. 2 and 3, a conventional robot cleaner comprises a running steering means 3 to move a main body; a running distance detecting means 5 to detect a running distance; a direction detecting means 4 to detect the direction of the main body; a judgment processing means 8 which receives outputs of the running distance detection means 5 and the direction detecting means 4 to output a running signal to the running steering means 3; a cleaning means 2 to clean a floor surface; a power source 1 to supply power to the main body as a whole; a running distance setting means 6; and a frequency setting means 7 to set the frequency of turning. The robot cleaner travels straight and U-turns by using the direction detecting means 4 and the running steering means 3. The cleaner robot judges whether the frequency of the turning and straight moving distance reach a specified value to perform cleaning. In FIG. 3, the reference numeral 18 depicts a robot cleaner body, and the reference numeral 19 depicts a travel trajectory.

However, the robot cleaner disclosed in the JP5161577 travels in a simple stripe travel pattern and fails to efficiently cover the cleaning area.

US 6,076,025 discloses a mobile robot steering method combining a spiral pattern running with a random pattern running.

### SUMMARY OF THE INVENTION

The present invention solves the above-mentioned problems. A first aspect of the present invention is to provide a robot vacuum cleaner which has a spiral cleaning travel pattern that evenly covers the cleaning area. A second aspect of the present invention is to provide a cleaning method by use of the aforementioned robot cleaner.

Accordingly, a robot vacuum cleaner according to the present invention is provided, comprising a driving unit moving a cleaner body on a cleaning surface; a distance detecting unit detecting a distance of travel by the driving unit; an obstacle detecting unit detecting an obstacle around the cleaner body; and a central processing unit moving the cleaner body to a location a certain distance away from the obstacle according to a cleaning travel pattern if the obstacle detecting unit detects an obstacle, and variably applying the distance whenever the obstacle is detected and outputting a travel signal to the driving unit.

The central processing unit may comprise a determination unit determining whether the obstacle is present based on a signal received from the obstacle detecting unit; a straight travel unit outputting a straight movement travel signal to the driving unit to move the cleaner body straight from the obstacle at a certain distance, in which the straight movement distance value is variable; a distance count unit calculating a straight distance of the driving unit based on information transmitted via the distance detecting unit; and a pivot unit outputting a spiral travel signal for spiral operation to the driving unit to perform cleaning if the distance count unit calculates the straight distance of the driving unit as reaching the certain distance. The spiral operation may comprise a rectangular-spiral operation.

The obstacle detecting unit may continuously detect the obstacle while the driving unit travels straight, and outputs a new straight travel signal to the driving unit if the determination unit determines that the obstacle is present during travel.

A method of controlling a robot vacuum cleaner according to the present invention comprising: detecting an obstacle; moving a body straight from the obstacle a certain distance if the obstacle is detected; and spirally pivoting the cleaner body to perform cleaning operation, wherein the detecting, the moving and the pivoting being repeated, and the straight movement distance being varied as the obstacle is detected during travel. The cleaner body may be pivoted in a rectangular-spiral pattern when pivoting the cleaner body.

In moving the cleaner body straight from the obstacle at a certain distance, detecting of the obstacle is continuously performed and the cleaner body travels straight based on a newly set straight movement value when the obstacle is detected during travel.

A robot cleaner according to an embodiment of the present invention as described above, provides a cleaning travel rectangular-spiral pattern, and the cleaning start point is variable when the cleaner collides with an obstacle such that the cleaning area coverage increases and uncleaned areas are prevented.

### BRIEF DESCRIPTION OF THE DRAWINGS

The above and other aspects, features and advantages of the present invention will be more apparent from the following detailed description taken with reference to the accompanying drawings, in which:

FIG. 1 is a diagrammatic view of a conventional random cleaning method;

FIG. 2 is a block diagram of a conventional pattern cleaning method;

FIG. 3 is a diagrammatic view of a cleaning travel pattern performed by the construction of FIG. 2;

FIG. 4 is a schematic view of a robot cleaner according to an embodiment of the present invention;

FIG. 5 is a block diagram of a robot cleaner according to an embodiment of the present invention;

FIG. 6 is a flowchart of the cleaning operation of a robot cleaner according to an embodiment of the present invention;

FIGS. 7A, 7B and 7C are views of exemplary spiral travel trajectories of a robot cleaner according to an embodiment of the present invention when distances from obstacles are varied as L1, L2 and L3, respectively;

FIG. 8 is a view of an example where uncleaned areas are generated when cleaning with a fixed distance; and

FIG. 9 is a view of an example of in which an area is evenly cleaned when cleaning with variable distances, as shown in FIGS. 7A to 7C, in accordance with the present invention.

### DETAILED DESCRIPTION OF THE EXEMPLARY EMBODIMENTS

In the following description, same drawing reference numerals are used for the same elements even in different drawings. The matters defined in the description, such as a detailed construction and elements, are provided only to assist in a comprehensive understanding of the invention. Thus, it is apparent that the present invention can be carried out without those defined matters. Also, well-known functions or constructions are not described in detail since they would obscure the invention in unnecessary detail.

Referring to FIG. 4, a robot cleaner 100 comprises a cleaner body 101, a cleaning unit 110, an obstacle detecting unit 130, a driving unit 150, a distance detecting unit 170, a central processing unit 190, a battery 210, and a manipulation unit 230.

The cleaner body 101 may be configured as a circle, and includes the cleaning unit 110 for collecting dust or contaminants from a cleaning surface. The cleaning unit 110 may consist of, for example, a suction brush 115 and a suction pipe (not shown) for drawing in dust or contaminants from the cleaning surface, a suction motor 113 for generating a suction force, and a dust chamber (not shown) for collecting the drawn in dust and contaminants.

The obstacle detecting unit 130 for sensing an obstacle is mounted to a front side of the cleaner body 101. The obstacle detecting unit 130 comprises an obstacle detecting sensor 131 for detecting an obstacle on walls or cleaning surfaces. The obstacle detecting sensor 131 may be, for example, a light sensor 131 a in which a luminous element emitting infrared rays and a light receiving element receiving reflected light are paired in a vertical relation. The obstacle detecting sensor 131 can also include a bump sensor 131b disposed along a circumference of front side of the cleaner body 101 and sensing an obstacle. The bump sensor 131b senses the obstacle when colliding with the obstacle. The obstacle detecting sensor 131 may be an ultrasonic wave sensor (not shown) which is capable of emitting ultrasonic waves and receiving reflected ultrasonic waves.

The driving unit 150 for controlling the driving wheels is mounted to the cleaner body 101. The driving unit 150 comprises a left wheel motor 153L and a right wheel motor 153R controlling each of a left wheel 151L and a right wheel 151R.

The distance detecting unit 170 comprises a left wheel encoder 171L and a right wheel encoder 171R that senses the rotating status of each of the left wheel motor 153L and the right wheel motor 153R.

The central processing unit 190 controls general operation of the robot cleaner 100, and the battery 210 charges power from an exterior charging device to provide to the robot cleaner as necessary. The manipulation unit 230 inputs a manipulation command of the robot cleaner to the central processing unit 190 according to the user's manipulation.

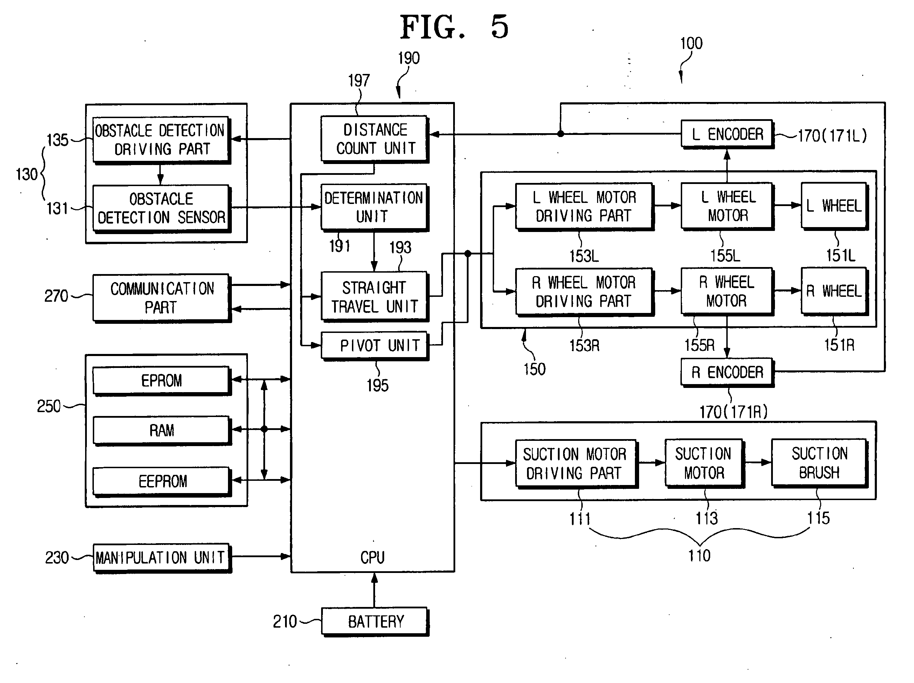

Referring to FIG. 5, the robot cleaner 100 includes the cleaning unit 110, the obstacle detecting unit 130, the driving unit 150, the distance detecting unit 170, the central processing unit 190, the battery 210, the manipulation unit 230, a memory 250, and a communication unit 270.

The cleaning unit 110 comprises a suction motor driving part 111 receiving a cleaning signal from the central processing unit 190 to drive a suction motor 113, and a suction brush 115 receiving the driving force of the suction motor 113 to be driven.

The obstacle detecting unit 130 senses an obstacle in front of the robot cleaner 100 and communicates the same to the central processing unit 190, and comprises an obstacle detecting driving part 135, and an obstacle detecting sensor 131 driven by the obstacle detecting driving part 135. The obstacle detecting sensor 131 may be, for example, a light sensor, an infrared ray sensor, or a bump sensor.

The driving unit 150 comprises the left wheel motor driving part 153L and the right wheel motor driving part 153R that receive travel signals from the central processing unit 190. Output driving signals from the unit 190 to the left wheel motor 155L and the right wheel motor 155R, drive the left wheel 151L and the right wheel 151R, respectively.

The distance detecting unit 170 communicates the distance of the robot cleaner 100 to the central processing unit 190, and comprises the left wheel encoder 171L (FIG. 4) and the right wheel encoder 171R (FIG. 4).

The central processing unit 190 the comprises a determination unit 191 that receives input from the obstacle detecting unit 130 to determine whether an obstacle is present. When an obstacle is sensed based on the information of the determination unit 191, a straight travel unit 193 communicates to the driving unit 150 to distance the robot cleaner 100 from the obstacle by a certain distance, and a pivot unit 195 communicates a pivot travel signal to the driving unit 150 to pivot the robot cleaner 100 according to a cleaning travel pattern when the robot cleaner 100 travels straight by a certain distance. The cleaning travel pattern may be spiral, and preferably rectangular-spiral. The rectangular-spiral pattern can more efficiently cover a cleaning area. The central processing unit 190 further comprises a distance count unit 197 that calculates a distance based on the number of times of rotation of the left wheel motor 155L and the right wheel motor 155R transmitted via the left wheel encoder 171L and the right wheel encoder 171R, respectively.

The manipulation unit 230 controls each operation of the robot cleaner 100 and comprises various manipulation switches. The memory 250 controls the entire operation of the robot cleaner 100, and includes EPROM (erasable programmable read-only memory), EEPROM (electrically erasable programmable read-only memory) and RAM (random access memory). The communication unit 270 sends out internal data of the robot cleaner 100, or transmits received external data to the central processing unit 190. The battery 210 stores power from an exterior charger (not shown) and supplies necessary power for driving the robot cleaner 100.

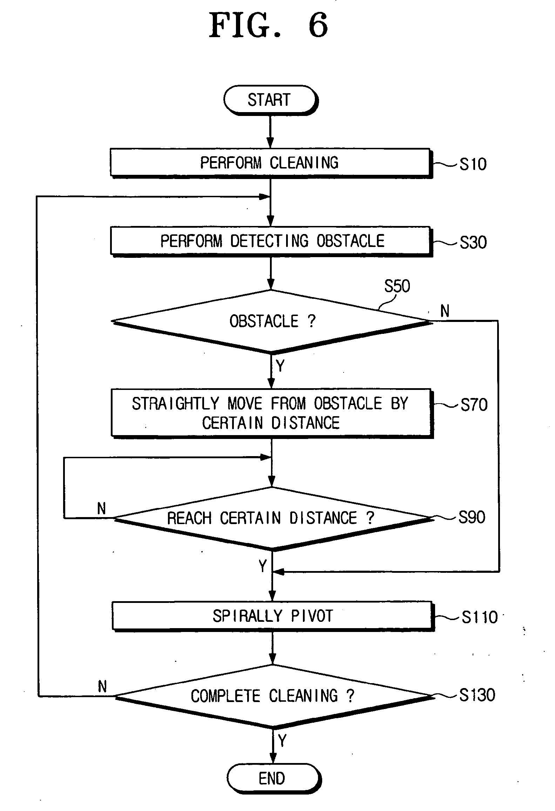

Referring to FIGS. 5 and 6, the robot cleaner 100 first performs a cleaning at step S10. The central processing unit 190 outputs a driving signal to the cleaning unit 110 and simultaneously outputs a driving signal to the driving unit 150 when a cleaning start signal is received from the manipulation unit 230. When the driving signal is outputted from the central processing unit 190 to the suction motor driving part 111, the suction motor driving part 111 drives the suction motor 113 to operate the suction brush 115. Dust or debris on the cleaning surface are drawn in via the suction brush 115 and moved into the dust chamber. Concurrently, as the driving signal from the central processing unit 190 is outputted to the left wheel motor driving part 153L or the right wheel motor driving part 153R, the left wheel motor 155L or the right wheel motor 155R is driven to move the left wheel 151L or the right wheel 151R along the cleaning travel pattern to clean in that pattern. The cleaning travel pattern can be rectangular-spiral so that the cleaning area can be covered evenly.

As described above, the central processing unit 190 outputs the obstacle detecting signal to the obstacle detecting driving part 135 and operates the obstacle detecting sensor 131 to detect an obstacle while cleaning step S30. The obstacle detecting driving part 135 may, for example, drive the obstacle detecting sensor 131 to detect an obstacle. The obstacle detecting sensor 131 may be, for example, the light sensor, the ultrasonic wave sensor, or the bump sensor. Accordingly, the obstacle detecting sensor 131 may drive the luminous element of the light sensor to output a light, or drive an ultrasonic wave generating part of the ultrasonic wave sensor to output ultrasound waves.

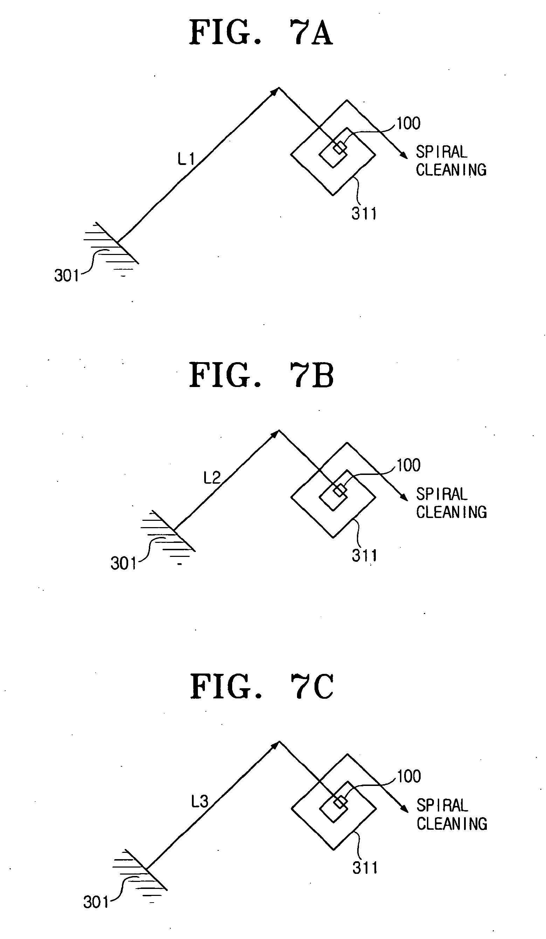

When the detecting signal is inputted to the central processing unit 190 via the obstacle detecting sensor 131, the determination unit 191 of the central processing unit 190 determines if an obstacle is detected at step S50. If so, the central processing unit 190 outputs the straight travel signal to the left wheel driving part 153L and the right wheel driving part 153R of the driving unit 150 and moves the robot cleaner 100 straight from the obstacle by a certain distance at step S70 (refer to FIG. 7).

The number of rotations of the left wheel motor 155L or the right wheel motor 155R is transmitted to the distance count unit 197 via the left wheel encoder 171L or the right wheel encoder 171R, and the distance count unit 197 calculates the straight distance to determine whether the robot cleaner 100 reaches a certain distance at step S90.

When it is determined that the robot cleaner 100 has moved a certain distance L, the distance count unit 197 transmits the signal to the pivot unit 195 and the pivot unit 195 outputs a pivot travel signal to the driving unit 150 so as to move the robot cleaner 100 in a spiral, and preferably in a rectangular-spiral pattern for cleaning operation at step S110.

If the robot cleaner 100 does not reach the certain distance L, the distance count unit 197 outputs the straight travel signal for continued straight movement of the driving unit 150 via the straight travel unit 193. While moving straight, the straight travel unit 193 outputs a new straight travel signal when a new obstacle is sensed and the robot cleaner 100 moves in accordance with the newly set straight movement value.

If cleaning is determined to be completed after step S 110, the cleaning is terminated, and if not, the aforementioned operations of cleaning are repeated. In the repetition of the aforementioned operations, the distance values of straightly moving the robot cleaner 100 straight from the obstacle are varied in step S70. This is to evenly cover the cleaning area and increase the cleaning efficiency.

FIGS. 7A, 7B and 7C are views of examples of spiral travel trajectories of the robot cleaner according to an embodiment of the present invention as distances from an obstacle 301 are varied as L1, L2 and L3, respectively.

In FIGS. 7A to 7C, the reference numeral 100 depicts a robot cleaner, the reference numeral 311 depicts a rectangular-spiral travel trajectory, and the reference numeral 301 depicts an obstacle, for example, on a wall or a cleaning surface.

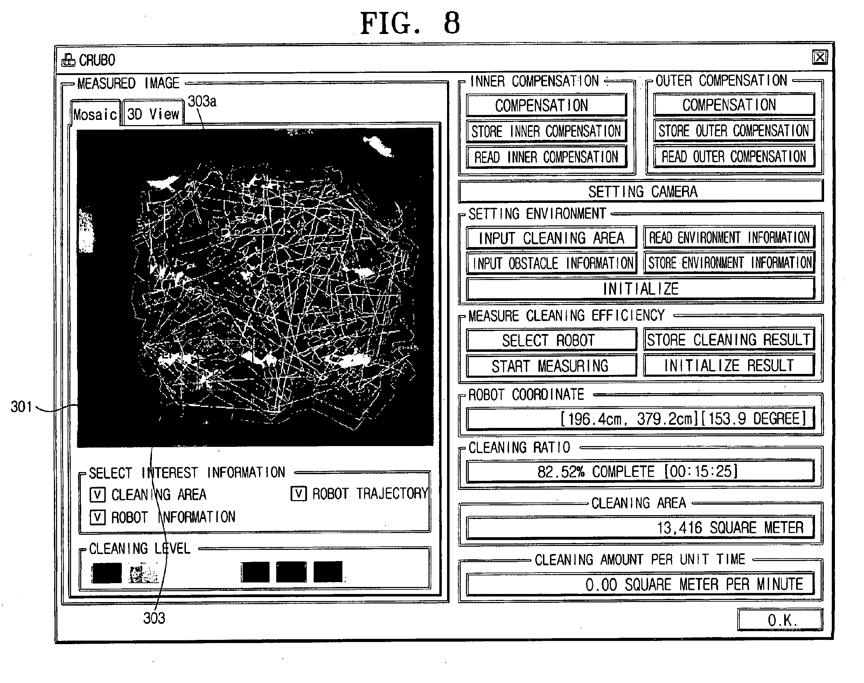

Referring to FIG. 8, the reference numeral 301 shows, for example, a wall, and the reference numeral 303 shows a cleaning surface. The portion identified with darkness on the cleaning surface 303 shows a cleaned area. If the distance from the obstacle 301 is kept regular, an uncleaned area 303a is generated as shown in FIG. 8. The darker portion in the identified cleaned area is a place where the robot cleaner 100 passes more frequently. As shown, certain limited areas are repeatedly cleaned while area 303a remains uncleaned.

Accordingly, the present invention applies variable distances L from the obstacle 303a, as shown in FIGS. 7A to 7C, for preventing only uncleaned areas.

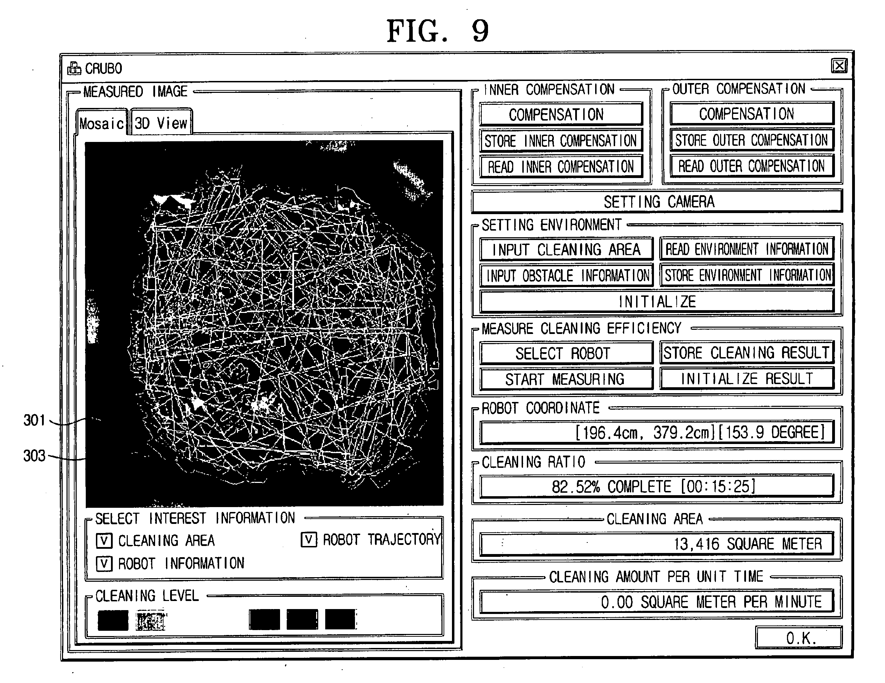

FIG. 9 is a view of an example of evenly-covered cleaning area when cleaning with variable distances L1, L2 and L3 as shown in FIGS. 7A to 7C. Referring to FIG. 9, the cleaning is regularly performed across the entire cleaning surface 303 and the darker portions increase as compared to FIG. 8.

Additional advantages, objects, and features of the embodiments of the invention will be set forth in part in the description which follows and in part will become apparent to those having ordinary skill in the art upon examination of the following, or may be learned from practice of the invention. The objects and advantages of the embodiments of the invention may be realized and attained as particularly pointed out in the appended claims.

## Claims

1. A robot vacuum cleaner (100), comprising:
a driving unit (150) moving a cleaner body (101) on a cleaning surface;
a distance detecting unit (170) detecting a distance of travel by the driving unit;
an obstacle detecting unit (130) detecting an obstacle near the cleaner body; and
a central processing unit (190) moving the cleaner body to a location a certain, distance (L) away from the obstacle according to a cleaning travel pattern when the obstacle detecting unit detects an obstacle, and varying the certain distance (L) whenever the obstacle is detected and outputting a travel signal to the driving unit,
**characterised in that** the moving the cleaner body (101) to the location the certain distance away from the obstacle is repeated until the obstacle detecting unit does not detect any obstacle again while the cleaner body (101) is moved by the certain distance (L).

2. The robot vacuum cleaner according to claim 1, wherein the central processing unit comprises:
a determination unit (191) determining whether the obstacle is present based on a signal received from the obstacle detecting unit;
a straight travel unit (193) outputting a straight movement travel signal to the driving unit to move the cleaner body straight from the obstacle by the certain distance (L), in which a straight movement distance value of the central processing unit is variable;
a distance count unit (197) calculating a straight distance of the driving unit based on information transmitted via the distance detecting unit; and
a pivot unit (195) outputting a spiral travel signal for spiral operation to the driving unit to perform cleaning when the distance count unit calculates the straight distance of the driving unit as reaching the certain distance (L).

3. The robot vacuum cleaner according to claim 2, wherein the spiral operation comprises a rectangular-spiral pattern (311).

4. The robot vacuum cleaner according to any of claims 2 and 3, wherein the obstacle detecting unit (130) continuously detects the obstacle while the driving unit (150) moves the cleaner body (101) in a straight direction, and outputs a new straight travel signal to the driving unit (150) when the determination unit determines that the obstacle is present during travel.

5. A method of controlling a robot vacuum cleaner comprising:
detecting an obstacle (S30);
moving a cleaner body (101) in a straight direction from the obstacle by a certain distance (L) when the obstacle is detected (S70); and
spirally pivoting (S110) the cleaner body to perform cleaning,
wherein the detecting, the moving and the pivoting being repeated, and the straight movement distance being varied whenever the obstacle is detected during travel of the body (101), **characterised in that** the moving is repeated until no obstacle is detected again while the cleaner body (101) is moved by the straight movement distance (L).

6. The method according to claim 5, wherein the cleaner body (101) rectangular-spirally pivots to perform the cleaning.

7. The method according to any of claims 5 and 6, wherein when moving of the cleaner body (101) in a straight direction from the obstacle by the certain distance, detecting of the obstacle is continuously performed and the cleaner body (101) travels straight based on a newly set straight movement value when the obstacle is detected during travel.

## Patentansprüche

1. Ein Roboter-Staubsauger (100), aufweisend:
eine Antriebseinheit (150), die einen Staubsaugerkörper (101) auf einer Reinigungsoberfläche bewegt,
eine Abstands-Detektionseinheit (170), die einen Fortbewegungsabstand durch die Antriebseinheit detektiert,
eine Hindernis-Detektionseinheit (130), die ein Hindernis in der Nähe des Staubsaugerkörpers detektiert, und
eine zentrale Verarbeitungseinheit (190), die, wenn die Hindernis-Detektionseinheit ein Hindernis detektiert, den Staubsaugerkörper gemäß einem Reinigungsfortbewegungs-Muster zu einer Stelle in einem bestimmten Abstand (L) von dem Hindernis wegbewegt, und die jedes Mal, wenn das Hindernis detektiert wird, den bestimmten Abstand (L) variiert und ein Fortbewegungssignal an die Antriebseinheit ausgibt,
**dadurch gekennzeichnet, dass** das Bewegen des Staubsaugerkörpers (101) zu der Stelle in dem bestimmten Abstand von dem Hindernis weg wiederholt wird, bis die Hindernis-Detektionseinheit kein Hindernis mehr detektiert, während der Staubsaugerkörper (101) um den bestimmten Abstand (L) bewegt wird.

2. Der Roboter-Staubsauger gemäß Anspruch 1, wobei die zentrale Verarbeitungseinheit aufweist:
eine Ermittlungseinheit (191), die auf der Grundlage eines von der Hindernis-Detektionseinheit empfangenen Signals ermittelt, ob das Hindernis vorhanden ist,
eine Geradeaus-Fortbewegungs-Einheit (193), die ein Geradeausbewegungs-Fortbewegungs-Signal an die Antriebseinheit ausgibt, um den Staubsaugerkörper um den bestimmten Abstand (L) geradeaus von dem Hindernis wegzubewegen, wobei ein Geradeausbewegungs-Abstandswert der zentralen Verarbeitungseinheit variabel ist,
eine Abstands-Zähl-Einheit (197), die einen Geradeaus-Abstand der Antriebseinheit auf der Grundlage von über die Abstands-Detektions-Einheit übermittelten Informationen berechnet,
eine Dreheinheit (195), die ein Spiralform-Fortbewegungs-Signal für einen Spiralform-Betrieb an die Antriebseinheit ausgibt, um ein Reinigen durchzuführen, wenn die Abstands-Zähl-Einheit berechnet, dass der Geradeaus-Abstand der Antriebseinheit den bestimmten Abstand (L) erreicht.

3. Der Roboter-Staubsauger gemäß Anspruch 2, wobei der Spiralform-Betrieb ein rechteckig-spiralförmiges Muster (311) aufweist.

4. Der Roboter-Staubsauger gemäß einem der Ansprüche 2 und 3, wobei die Hindernis-Detektions-Einheit (130) das Hindernis kontinuierlich detektiert, während die Antriebseinheit (150) den Staubsaugerkörper (101) in einer Geradeausrichtung bewegt, und ein neues Geradeaus-Fortbewegungs-Signal an die Antriebseinheit (150) ausgibt, wenn die Ermittlungseinheit ermittelt, dass das Hindernis während des Fortbewegens vorhanden ist.

5. Ein Verfahren zum Steuern eines Roboter-Staubsaugers, aufweisend:
Detektieren eines Hindernisses (S30),
Bewegen eines Staubsaugerkörpers (101) in einer Geradeausrichtung in einem bestimmten Abstand (L) von dem Hindernis weg, wenn das Hindernis detektiert wird (S70), und
spiralförmiges Drehen (S110) des Staubsaugerkörpers, um das Reinigen durchzuführen,
wobei das Detektieren, das Bewegen und das Drehen wiederholt werden und der Geradeausbewegungs-Abstand jedes Mal variiert wird, wenn das Hindernis während des Fortbewegens des Körpers (101) detektiert wird, **dadurch gekennzeichnet, dass** das Bewegen wiederholt wird, bis kein Hindernis mehr detektiert wird, während der Staubsaugerkörper (101) um den Geradeausbewegungs-Abstand (L) bewegt wird.

6. Das Verfahren gemäß Anspruch 5, wobei der Staubsaugerkörper (101) sich rechteckig-spiralförmig dreht, um das Reinigen durchzuführen.

7. Das Verfahren gemäß einem der Ansprüche 5 und 6, wobei, wenn der Staubsaugerkörper (101) um den bestimmten Abstand in einer Geradeausrichtung von dem Hindernis wegbewegt wird, das Detektieren des Hindernisses kontinuierlich erfolgt, und der Reinigerkörper (101) sich auf der Grundlage eines neu eingestellten Geradeausbewegungswertes geradeaus fortbewegt, wenn das Hindernis während des Fortbewegens detektiert wird.

## Revendications

1. Robot aspirateur (100) comprenant :
une unité d'entraînement (150) déplaçant un corps d'aspirateur (101) sur une surface de nettoyage ;
une unité de détection de distance (170) détectant une distance de parcours par l'unité d'entraînement ;
une unité de détection d'obstacle (130) détectant un obstacle à proximité du corps d'aspirateur ; et
une unité centrale (190) déplaçant le corps d'aspirateur vers un emplacement éloigné d'une certaine distance (L) de l'obstacle selon un schéma de parcours d'aspiration lorsque l'unité de détection d'obstacle détecte un obstacle, et faisant varier la certaine distance (L) si l'obstacle est détecté et fournissant en sortie un signal de parcours à l'unité d'entraînement,
**caractérisé en ce que** le déplacement du corps d'aspirateur (101) vers l'emplacement éloigné de la certaine distance de l'obstacle est répété jusqu'à ce que l'unité de détection d'obstacle ne détecte plus aucun obstacle tandis que le corps d'aspirateur (101) est déplacé de la certaine distance (L).

2. Robot aspirateur selon la revendication 1, dans lequel l'unité centrale comprend :
une unité de détermination (191) déterminant si l'obstacle est présent d'après un signal reçu de l'unité de détection d'obstacle ;
une unité de parcours en ligne droite (193) fournissant en sortie un signal de parcours de déplacement en ligne droite à l'unité d'entraînement pour éloigner le corps d'aspirateur en ligne droite de l'obstacle de la certaine distance (L), dans laquelle une valeur de distance de déplacement en ligne droite de l'unité centrale est variable ;
une unité de mesure de distance (197) calculant une distance en ligne droite de l'unité d'entraînement d'après des informations transmises via l'unité de détection de distance ; et
une unité de pivot (195) fournissant en sortie un signal de parcours en spirale pour un fonctionnement en spirale à l'unité d'entraînement afin d'effectuer un nettoyage lorsque l'unité de mesure de distance calcule la distance en ligne droite de l'unité d'entraînement comme atteignant la certaine distance (L).

3. Robot aspirateur selon la revendication 2, dans lequel le fonctionnement en spirale comprend un schéma en spirale rectangulaire (311).

4. Robot aspirateur selon l'une quelconque des revendications 2 et 3, dans lequel l'unité de détection d'obstacle (130) détecte en continu l'obstacle tandis que l'unité d'entraînement (150) déplace le corps d'aspirateur (101) dans une direction en ligne droite, et fournit en sortie un nouveau signal de parcours en ligne droite à l'unité d'entraînement (150) lorsque l'unité de détermination détermine que l'obstacle est présent pendant le parcours.

5. Procédé de commande d'un robot aspirateur comprenant :
la détection d'un obstacle (S30) ;
le déplacement d'un corps d'aspirateur (101) dans une direction en ligne droite à partir de l'obstacle d'une certaine distance (L) lorsque l'obstacle est détecté (S70) ; et
le pivotement en spirale (S110) du corps d'aspirateur pour effectuer un nettoyage,
dans lequel la détection, le déplacement et le pivotement sont répétés, et la distance de déplacement en ligne droite varie lorsque l'obstacle est détecté pendant le parcours du corps (101), **caractérisé en ce que** le déplacement est répété jusqu'à ce qu'aucun obstacle ne soit plus détecté tandis que le corps d'aspirateur (101) est déplacé de la distance de déplacement en ligne droite (L).

6. Procédé selon la revendication 5, dans lequel le corps d'aspirateur (101) pivote en spirale rectangulaire pour effectuer le nettoyage.

7. Procédé selon l'une quelconque des revendications 5 et 6, dans lequel lors du déplacement du corps d'aspirateur (101) dans une direction en ligne droite à partir de l'obstacle de la certaine distance, la détection de l'obstacle est effectuée en continu et le corps d'aspirateur (101) se déplace en ligne droite d'après une valeur de déplacement en ligne droite nouvellement établie lorsque l'obstacle est détecté pendant le parcours.
